# EUROPÄISCHE PATENTANMELDUNG

(11) **EP 3 309 635 A1**
(43) Veröffentlichungstag der Anmeldung: **18.04.2018**
(21) Anmeldenummer: 16194200.8
(22) Anmeldetag: 17.10.2016
(51) Int. Cl.: G05B 19/4093, G05B 19/4097

(54) **ERMITTLUNG EINES FÜR EINE JEWEILIGE BEARBEITUNGSMASCHINE OPTIMIERTEN TEILEPROGRAMMS**

(71) Anmelder: Siemens Aktiengesellschaft, 80333 München (DE)
(72) Erfinder: Hopf, Ronny, 08248 Klingenthal (DE); Immenroth, Lars, 08056 Zwickau (DE); Siegel, Philipp, 08064 Zwickau (DE); Uhlich, Andreas, 90530 Wendelstein (DE); Vieweg, André, 09112 Chemnitz (DE)

(57) **Zusammenfassung**

Eine Recheneinrichtung (4) nimmt eine Zielkontur (2) eines Werkstücks (3) entgegen. Sie ermittelt, ausgehend von einer Anfangskontur (10) des Werkstücks (3), eine Bahn (B), die von einem Werkzeug (9) einer Bearbeitungsmaschine (7) relativ zu dem von dem Werkzeug (9) zu bearbeitenden Werkstück (3) abgefahren werden soll. Die Ermittlung ist derart, dass die durch das Abfahren der Bahn (B) bewirkte Bearbeitung des Werkstücks (3) das Werkstück (3) in die Zielkontur (2) überführt. Die Recheneinrichtung (4) berücksichtigt im Rahmen der Ermittlung der Bahn (B) maschinenspezifische Dynamikparameter (D) der Bearbeitungsmaschine (7), die während der Bearbeitung des Werkstücks (3) durch das Werkzeug (9) einzuhalten sind.

## Beschreibung

Die vorliegende Erfindung geht aus von einem Ermittlungsverfahren für eine Bahn, die von einem Werkzeug einer Bearbeitungsmaschine relativ zu einem von dem Werkzeug zu bearbeitenden Werkstück abgefahren werden soll,
- wobei eine Recheneinrichtung eine Zielkontur des Werkstücks entgegennimmt,
- wobei die Recheneinrichtung, ausgehend von einer Anfangskontur des Werkstücks, die Bahn derart ermittelt, dass die durch das Abfahren der Bahn bewirkte Bearbeitung des Werkstücks das Werkstück in die Zielkontur überführt.

Die vorliegende Erfindung geht weiterhin aus von einem Computerprogramm, das Maschinencode umfasst, der von einer Recheneinrichtung abarbeitbar ist, wobei die Abarbeitung des Maschinencodes durch die Recheneinrichtung bewirkt, dass die Recheneinrichtung ein derartiges Ermittlungsverfahren ausführt.

Die vorliegende Erfindung geht weiterhin aus von einer Recheneinrichtung, wobei die Recheneinrichtung mit einem derartigen Computerprogramm programmiert ist, so dass die Recheneinrichtung im Betrieb ein derartiges Ermittlungsverfahren ausführt.

Derartige Ermittlungsverfahren, Computerprogramme und Recheneinrichtungen sind allgemein bekannt.

Zur Ermittlung eines Teileprogramms (das die Bahn festlegt, die von dem Werkzeug der Bearbeitungsmaschine relativ zum Werkstück abgefahren werden soll) wird im Stand der Technik zunächst eine CAD-Datei (CAD = Computer Aided Design) erstellt. Die CAD-Datei legt die Zielkontur des Werkstücks fest, also diejenige Kontur, die das Werkstück nach der Bearbeitung durch das Werkzeug der Bearbeitungsmaschine aufweisen soll. Diese Kontur wird sodann einer CAM-Maschine (CAM = Computer Aided Manufacturing) zugeführt. Die CAM-Maschine (das heißt eine entsprechend programmierte Recheneinrichtung) ermittelt die Bahn (bzw. erstellt das Teileprogramm).

Die Umsetzung der CAD-Datei in das Teileprogramm kann im Stand der Technik maschinenneutral erfolgen. Maschinenneutral bedeutet in diesem Zusammenhang, dass das Teileprogramm zwar die Bahn als solche festlegt, die Art und Weise, auf welche die Bearbeitungsmaschine und die zugehörige numerische Steuerung das Abfahren der Bahn realisieren, jedoch völlig offen lässt. Die Kinematik der Bearbeitungsmaschine wird in diesem Fall - wenn überhaupt - nur insoweit berücksichtigt, dass die Bearbeitungsmaschine die generierte Bahn überhaupt realisieren kann. Alternativ ist es möglich, dass im Rahmen der Umsetzung bereits die Kinematik der Bearbeitungsmaschine mit berücksichtigt wird. In beiden Fällen wird jedoch die Dynamik der Bearbeitungsmaschine - wenn überhaupt - nur insoweit berücksichtigt, dass eine Maximalgeschwindigkeit ("Schnellgang") vorgegeben werden kann, mit der das Werkzeug relativ zum Werkstück bewegt werden kann, während das Werkzeug das Werkstück nicht bearbeitet. Die numerische Steuerung ist in der Regel noch frei wählbar. Das Teileprogramm kann daher auf verschiedenen numerischen Steuerungen desselben Herstellers oder verschiedener Hersteller von numerischen Steuerungen ausgeführt werden.

Die Vorgehensweise des Standes der Technik ist insoweit vollauf befriedigend, als die Ausführung des erzeugten Teileprogramms bzw. das Abfahren der generierten Bahn die gewünschte Bearbeitung realisiert, das Werkstück also in die Zielkontur überführt. Das Teileprogramm ist jedoch oftmals insofern suboptimal, als ein anderes Teileprogramm zwar im Ergebnis die gleiche Bearbeitung (d.h. die Generierung des Werkstücks in der Zielkontur) bewirken kann, dieses andere Teileprogramm jedoch die Dynamik der Bearbeitungsmaschine besser ausnützt.

Die Aufgabe der vorliegenden Erfindung besteht darin, Möglichkeiten zu schaffen, mittels derer ein derartiges Teileprogramm generiert werden kann.

Die Aufgabe wird durch ein Ermittlungsverfahren mit den Merkmalen des Anspruchs 1 gelöst. Vorteilhafte Ausgestaltungen des Ermittlungsverfahrens sind Gegenstand der abhängigen Ansprüche 2 bis 7.

Erfindungsgemäß wird ein Ermittlungsverfahren der eingangs genannten Art dadurch ausgestaltet, dass die Recheneinrichtung im Rahmen der Ermittlung der Bahn maschinenspezifische Dynamikparameter der Bearbeitungsmaschine berücksichtigt, die während der Bearbeitung des Werkstücks durch das Werkzeug einzuhalten sind. In diesem Fall kann ein Teileprogramm generiert werden, das auf konkret der Bearbeitungsmaschine, für die das Teileprogramm generiert wurde, in verbesserter Weise (insbesondere in kürzerer Zeit) ausführbar ist. Das Teileprogramm kann aber weiterhin - wie im Stand der Technik auch - maschinen- und steuerungsunabhängig sein. Es kann also ebenso auch auf einer anderen Bearbeitungsmaschine ausgeführt werden. Lediglich die Optimierung kann bei einem Transfer zu einer anderen Bearbeitungsmaschine verlorengehen.

Die Dynamikparameter der Bearbeitungsmaschine können nach Bedarf bestimmt sein. Beispielsweise können die Dynamikparameter für jede Achse der Bearbeitungsmaschine eine maximale Geschwindigkeit und/oder eine maximale Beschleunigung und/oder einen maximalen Ruck umfassen. Meist sind in diesen Fällen zumindest die maximale Geschwindigkeit und die maximale Beschleunigung gegeben. Alternativ oder zusätzlich können auch korrespondierende antriebsspezifische Größen vorgegeben sein wie beispielsweise die maximale Drehzahl, das maximale Antriebsmoment und/oder die maximale Stromänderung (die mit dem Ruck gekoppelt ist).

Vorzugsweise ermittelt die Recheneinrichtung die Bahn derart, dass sie unter Berücksichtigung der maschinenspezifischen Dynamikparameter der Bearbeitungsmaschine gemäß einem Bewertungskriterium optimal ist. In das Bewertungskriterium kann beispielsweise die zum Abfahren der Bahn benötigte Zeit eingehen. Alternativ oder zusätzlich kann in das Bewertungskriterium mindestens ein von der Bearbeitung des Werkstücks durch das Werkzeug abhängiges Technologiekriterium eingehen. Das Technologiekriterium hängt von der Bearbeitung als solcher ab. Beim Fräsen kann das Technologiekriterium beispielsweise darin bestehen, möglichst eine konstante Schnittleistung einzuhalten. Beim Schleifen kann das Technologiekriterium beispielsweise darin bestehen, dass eine Minimalgeschwindigkeit des Werkzeugs relativ zum Werkstück zu keinem Zeitpunkt unterschritten wird. Weitere Kriterien können die Minimierung des Verschleißes des Werkzeugs und/oder der Bearbeitungsmaschine (beispielsweise von deren Lagern) sein. Auch andere Kriterien - beispielsweise die Minimierung der benötigten Energie - sind möglich.

Die Bearbeitungsmaschine wird von einer numerischen Steuerung gesteuert. Je nachdem, wie die numerische Steuerung ausgestaltet ist, weist die numerische Steuerung mehr oder weniger steuerungsspezifische Möglichkeiten auf, beispielsweise von der numerischen Steuerung intern generierbare Zyklen. In einer bevorzugten Ausgestaltung der vorliegenden Erfindung ist daher vorgesehen, dass die Recheneinrichtung im Rahmen der Ermittlung der Bahn zusätzlich steuerungsspezifische Parameter der numerischen Steuerung berücksichtigt. Ein auf diese Weise erzeugtes Teileprogramm ist (im Sinne der prinzipiellen Ausführbarkeit) zwar immer noch maschinenunabhängig, aber nicht mehr steuerungsunabhängig.

In einer weiter bevorzugten Ausgestaltung nimmt die Recheneinrichtung zusätzlich mindestens einen die Bearbeitung des Werkstücks durch das Werkzeug qualitativ oder quantitativ charakterisierenden Bearbeitungsparameter entgegen und berücksichtigt im Rahmen der Ermittlung der Bahn zusätzlich den Bearbeitungsparameter. Beispielsweise können je nach Material des Werkzeugs (beispielsweise Hartmetall, gehärteter Stahl oder normaler Werkzeugstahl) und/oder Werkstück (beispielsweise Holz, Kunststoff, Aluminium, Stahl, Kupfer usw.) andere Vorschubgeschwindigkeiten, Schnitttiefen usw. möglich sein. Auch kann beispielsweise eine gewünschte Schnitttiefe als solche vorgegeben werden.

Im einfachsten Fall sind die von der Recheneinrichtung berücksichtigten Dynamikparameter der Bearbeitungsmaschine statische Größen. In einer bevorzugten Ausgestaltung führt die Recheneinrichtung die Dynamikparameter der Bearbeitungsmaschine in Abhängigkeit von der durch das Abfahren der Bahn bewirkten Bearbeitung des Werkstücks jedoch nach und berücksichtigt im Rahmen der Ermittlung der Bahn die dynamischen maschinenspezifischen Dynamikparameter der Bearbeitungsmaschine. Wenn beispielsweise zum Abfahren der Bahn das Werkzeug in einer ersten Richtung und das Werkstück in einer zweiten Richtung bewegt werden und weiterhin die Masse des Werkstücks durch die Bearbeitung in erheblichem Umfang reduziert wird, ist bei gleichem Moment des die Achse antreibenden Antriebs eine Bewegung des Werkstücks in der zweiten Richtung gegen Ende der Bearbeitung mit einer höheren Beschleunigung und einem höheren Ruck möglich als zu Beginn der Bearbeitung. Die Recheneinrichtung kann daher für jeden Zeitpunkt der Bearbeitung des Werkstücks durch das Werkzeug die jeweilige momentan resultierende Masse des Werkstücks ermitteln und ausgehend von der Masse in Verbindung mit der vom zugehörigen Antrieb bewirkbaren Bewegungskraft die zugehörige Beschleunigung ermitteln. Dadurch kann die Recheneinrichtung beispielsweise ermitteln, ob die Beschleunigung des Werkstücks in der zweiten Richtung in einem bestimmten Stadium der Bearbeitung durch den Dynamikparameter "maximal zulässiger Motorstrom" oder durch den Dynamikparameter "maximal zulässige Beschleunigung" begrenzt wird. Analoge Aussagen gelten für den Ruck. Die maximale Geschwindigkeit bleibt hingegen im Regelfall unverändert. Es dauert lediglich länger, bis sie erreicht wird.

Die Bewertung der Bearbeitung (im Sinne des Bewertungskriteriums) kann unter Umständen auch davon abhängen, wie das Werkstück in einer Werkstückhalterung der Bearbeitungsmaschine eingespannt ist. In einer bevorzugten Ausgestaltung der vorliegenden Erfindung ermittelt die Recheneinrichtung daher zusätzlich zur Bahn auch eine Aufspannung für das Werkstück in einer Werkstückhalterung der Bearbeitungsmaschine.

Die Aufgabe wird weiterhin durch ein Computerprogramm mit den Merkmalen des Anspruchs 8 gelöst. Erfindungsgemäß ist ein Computerprogramm der eingangs genannten Art derart ausgebildet, dass die Abarbeitung des Maschinencodes durch die Recheneinrichtung bewirkt, dass die Recheneinrichtung ein erfindungsgemäßes Ermittlungsverfahren ausführt.

Die Aufgabe wird weiterhin durch eine Recheneinrichtung mit den Merkmalen des Anspruchs 9 gelöst. Vorteilhafte Ausgestaltungen der Recheneinrichtung sind Gegenstand der abhängigen Ansprüche 10 und 11.

Erfindungsgemäß ist eine Recheneinrichtung der eingangs genannten Art mit einem erfindungsgemäßen Computerprogramm programmiert, so dass die Recheneinrichtung im Betrieb ein erfindungsgemäßes Ermittlungsverfahren ausführt.

Es ist möglich, dass die Recheneinrichtung mit einer die Bearbeitungsmaschine steuernden numerischen Steuerung zu einer Einheit zusammengefasst ist. In diesem Fall stehen der Recheneinrichtung die Dynamikparameter der Bearbeitungsmaschine ohne weiteres zur Verfügung, da die Dynamikparameter der Bearbeitungsmaschine in der numerischen Steuerung hinterlegt sind. Es ist jedoch ebenso möglich, dass die Recheneinrichtung eine von einer die Bearbeitungsmaschine steuernden numerischen Steuerung getrennte Einheit ist. In diesem Fall müssen die Dynamikparameter der Bearbeitungsmaschine der Recheneinrichtung bekannt gemacht werden. Dies kann beispielsweise über eine bidirektionale Datenverbindung zwischen der Recheneinheit und der numerischen Steuerung realisiert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: im Überblick ein CAD-System, ein CAM-System, eine numerische Steuerung und eine Bearbeitungsmaschine,
- FIG 2: ein Ablaufdiagramm,
- FIG 3: eine Tabelle,
- FIG 4: ein mögliches Bewertungskriterium und
- FIG 5: ein weiteres Ablaufdiagramm.

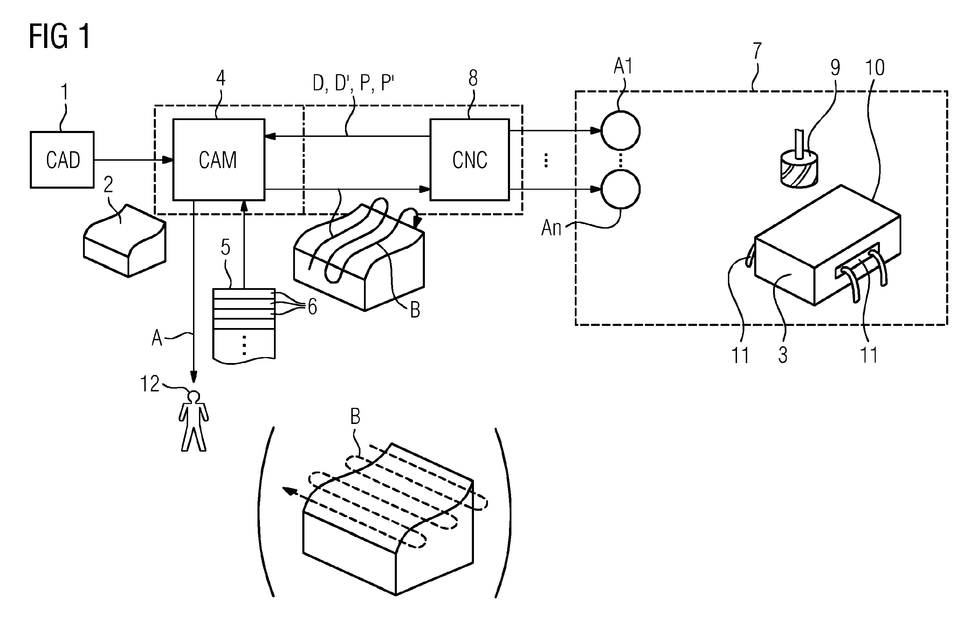

Gemäß FIG 1 wird mittels eines üblichen CAD-Systems 1 eine Zielkontur 2 eines Werkstücks 3 definiert. Die Zielkontur 2 wird einem CAM-System 4 zugeführt. Das CAM-System 4 ist mit einem Computerprogramm 5 programmiert. Das CAM-System 4 ist im Kern eine Recheneinrichtung. Die Begriffe CAM-System 4 und Recheneinrichtung werden daher synonym verwendet. Das Computerprogramm 5 umfasst Maschinencode 6, der von dem CAM-System 4 abarbeitbar ist. Die Abarbeitung des Maschinencodes 6 durch das CAM-System 4 bewirkt, dass das CAM-System 4 ein Ermittlungsverfahren ausführt, das nachstehend näher erläutert wird.

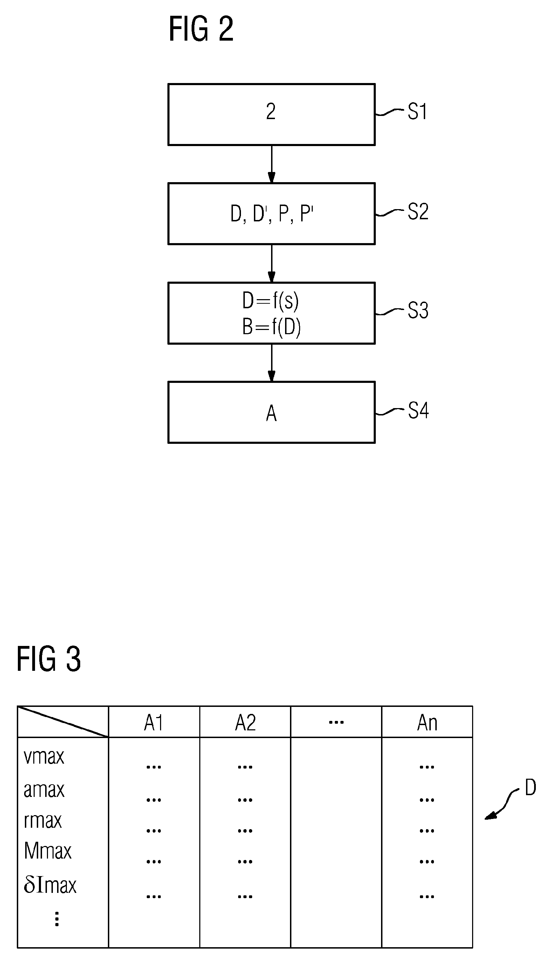

Im Rahmen der Ausführung des Computerprogramms 5 nimmt das CAM-System 4 entsprechend der Darstellung in FIG 2 in einem Schritt S1 von dem CAD-System 1 die Zielkontur 2 entgegen. Weiterhin werden dem CAM-System 4 in einem Schritt S2 Dynamikparameter D einer Bearbeitungsmaschine 7 (siehe FIG 1) bekannt. Beispielsweise können die Dynamikparameter D dem CAM-System 4 von einer numerischen Steuerung 8 (CNC = computer numerical control) der Bearbeitungsmaschine 7 zugeführt werden. Die numerische Steuerung 8 steuert eine Anzahl von Achsen A1 bis An (n = 3, 4, 5, ...) der Bearbeitungsmaschine 7. Aufgrund der Ansteuerung der Achsen A1 bis An wird ein Werkzeug 9 der Bearbeitungsmaschine 7 relativ zum Werkstück 3 lagegeregelt positioniert. Die Dynamikparameter D sind Dynamikparameter der Bearbeitungsmaschine 7, die während der Bearbeitung des Werkstücks 3 durch das Werkzeug 9 eingehalten werden müssen. Es kann sich bei den Dynamikparametern D entsprechend der Darstellung in FIG 3 beispielsweise um eine maximal mögliche Geschwindigkeit vmax einer Achse A1 bis An der Bearbeitungsmaschine 7, eine maximal mögliche Beschleunigung amax einer Achse A1 bis An der Bearbeitungsmaschine 7, einen maximal möglichen Ruck rmax einer Achse Achse A1 bis An der Bearbeitungsmaschine 7, ein maximales Moment Mmax des Antriebs einer Achse Achse A1 bis An der Bearbeitungsmaschine 7, einen maximalen Stromanstieg δImax (in A/s) des jeweiligen Antriebs usw. handeln. Die Dynamikparameter D können entsprechend der Darstellung in FIG 3 einzeln für jede Achse A1 bis An der Bearbeitungsmaschine 7 definiert sein.

Die genannten Dynamikparameter D sind auf den Zustand bezogen, in dem das Werkstück 3 durch das Werkzeug 9 bearbeitet wird, in dem also beispielsweise bei einer spanenden Bearbeitung ein Fräser (als Beispiel eines hierfür geeigneten Werkzeugs 9) im Eingriff mit dem Werkstück 3 steht. Die Dynamikparameter D sind hingegen nicht auf den Zustand bezogen, in dem das Werkzeug 9 zwar relativ zum Werkstück 3 verfahren wird, das Werkstück 3 während dieser Bewegung jedoch nicht durch das Werkzeug 9 bearbeitet wird. Es ist möglich, dass zusätzlich zu den maschinenspezifischen Dynamikparametern D weitere maschinenspezifische Dynamikparameter D' definiert sind. In diesem Fall sind die maschinenspezifischen Dynamikparameter D' auf den Zustand bezogen, in dem das Werkstück 3 nicht durch das Werkzeug 9 bearbeitet wird. Die weiteren maschinenspezifischen Dynamikparameter D' können ebenfalls dem CAM-System 4 zugeführt werden und analog zu den maschinenspezifischen Dynamikparametern D berücksichtigt werden.

In einem Schritt S3 ermittelt das CAM-System 4 eine Bahn B (bzw. das entsprechende Teileprogramm) für die Bearbeitungsmaschine 7. Die Bearbeitungsmaschine 7 kann beispielsweise als Bearbeitungsmaschine, als Produktionsmaschine oder als Roboter ausgebildet sein. Die Bahn B entspricht der Bahn, die von dem Werkzeug 9 der Bearbeitungsmaschine 7 relativ zu dem von dem Werkzeug 9 zu bearbeitenden Werkstück 3 abgefahren werden soll. Das Abfahren der Bahn B durch das Werkzeug 9 bewirkt, dass die dadurch bewirkte Bearbeitung des Werkstücks 3 durch das Werkzeug 9 das Werkstück 3 in die Zielkontur 2 überführt.

Dem CAM-System 4 ist zusätzlich zu der Zielkontur 3 auch eine Anfangskontur 10 des Werkstücks 3 bekannt, also diejenige Kontur, die das Werkstück 3 vor der Bearbeitung durch das Werkzeug 9 aufweist. Das CAM-System 4 ermittelt daher im Schritt S3 die Bahn B ausgehend von der Anfangskontur 10. Die Anfangskontur 10 kann dem CAM-System 4 explizit vorgegeben werden oder dem CAM-System 4 aufgrund anderer Umstände bekannt sein.

Es ist möglich, dass die Bearbeitung mit einem Materialabtrag verbunden ist. In diesem Fall ist die Anfangskontur 10 eine Maximalkontur. Alternativ ist es möglich, dass die Bearbeitung mit einem Materialaufbau verbunden ist. In diesem Fall ist die Anfangskontur 10 eine Minimalkontur.

Die Ermittlung der Bahn B erfolgt - selbstverständlich - derart, dass die dadurch bewirkte Bearbeitung des Werkstücks 3 durch das Werkzeug 9 das Werkstück 3 in die Zielkontur 2 überführt. Die das CAM-System 4 berücksichtigt im Schritt S3, also bei der Ermittlung der Bahn B, jedoch nicht nur die Zielkontur 2, sondern auch die maschinenspezifischen Dynamikparameter D der Bearbeitungsmaschine 7 und gegebenenfalls auch die weiteren maschinenspezifischen Dynamikparameter D'.

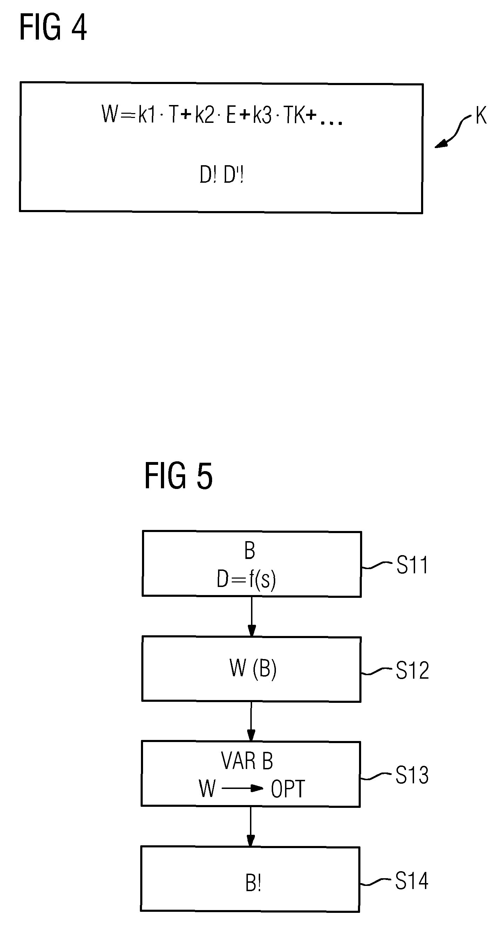

In der Regel ermittelt das CAM-System 4 die Bahn B derart, dass die ermittelte Bahn B unter Berücksichtigung der maschinenspezifischen Dynamikparameter D der Bearbeitungsmaschine 7 gemäß einem Bewertungskriterium K optimal ist. In das Bewertungskriterium K kann beispielsweise gemäß FIG 4 die zum Abfahren der Bahn B benötigte Zeit T eingehen. Alternativ oder zusätzlich kann in das Bewertungskriterium K die zum Abfahren der Bahn B und die damit verbundene Bearbeitung benötigte Energie E eingehen. Weiterhin kann in das Bewertungskriterium K ein von der Bearbeitung des Werkstücks 3 durch das Werkzeug 9 abhängiges Technologiekriterium TK eingehen. Das Technologiekriterium TK kann beispielsweise eine möglichst konstante Zerspanungsleistung, ein minimaler Verschleiß des Werkzeugs 9, ein minimaler Verschleiß der Bearbeitungsmaschine 7 usw. sein. Die einzelnen Kriterien, die zur Ermittlung des Wertes W herangezogen werden, können mit entsprechenden Wichtungsfaktoren k1, k2 usw. gewichtet werden. Einzelne der Wichtungsfaktoren k1, k2 usw. können den Wert 0 aufweisen. Mindestens einer der Wichtungsfaktoren k1, k2 usw. muss jedoch einen von 0 verschiedenen Wert aufweisen.

Beispielsweise kann das CAM-System 4 zur Implementierung des Schrittes S3 gemäß FIG 5 in einem Schritt S11 die Bahn B zunächst als vorläufige Bahn B ansetzen. In diesem Fall ermittelt das CAM-System 4 in einem Schritt S12 einen Wert W für das Bewertungskriterium K. In einem Schritt S13 variiert das CAM-System 4 die angesetzte Bahn B. Das Variieren erfolgt derart, dass der Wert W des Bewertungskriteriums K einen optimalen Wert annimmt, insbesondere maximal oder minimal wird. Hierbei werden gemäß FIG 4 die vorgegebenen maschinenspezifischen Dynamikparameter D berücksichtigt, so dass diese stets eingehalten werden. In einem Schritt S14 übernimmt das CAM-System 4 die im Schritt S13 variierte Bahn B als endgültige Bahn B.

Die Optimierung kann beispielsweise dazu führen, dass die Bahn B nicht so definiert ist, dass sie - wie in FIG 1 in durchgezogenen Linien dargestellt - längs des Werkstücks 3 abgefahren wird, sondern so, dass sie - wie in FIG 1 in Klammern und in gestrichelten Linien dargestellt - quer des Werkstücks 3 abgefahren wird. Die beiden Darstellungen in FIG 1 sind jedoch nicht beschränkend zu verstehen. Sie sollen lediglich darstellen, dass die Bahn B, die unter Berücksichtigung der Dynamikparameter D ermittelt wird, anders aussehen kann als die Bahn B, die ohne Berücksichtigung der Dynamikparameter D ermittelt würde.

Die obenstehend beschriebene Vorgehensweise führt bereits zu überlegenen Ergebnissen. Zusätzlich ist es möglich, dass das CAM-System 4 im Rahmen der Ermittlung der Bahn B steuerungsspezifische Parameter P der numerischen Steuerung 8 berücksichtigt. Die steuerungsspezifischen Parameter P können dem CAM-System 4 beispielsweise im Schritt S2 zusammen mit den Dynamikparametern D zugeführt werden. Sie können beispielsweise angeben, welche gegenüber der DIN 66025 zusätzliche Funktionalitäten - insbesondere höhere mathematische Funktionalitäten wie beispielsweise Zyklen, Splines, NURBS oder Polynome - die numerische Steuerung 8 ausführen kann. Diese Funktionalitäten können zur noch weitergehenden Optimierung im Rahmen des Schrittes S3 bzw. der Schritte S11 bis S14 genutzt werden.

Weiterhin ist es möglich, dass das CAM-System 4 zusätzlich mindestens einen Bearbeitungsparameter P' entgegennimmt, der die Bearbeitung des Werkstücks 3 durch das Werkzeug 9 qualitativ oder quantitativ charakterisiert. Beispielsweise kann dem CAM-System 4 als Bearbeitungsparameter P' das Material des Werkzeugs 9 und/oder das Material des Werkstücks 3 vorgegeben werden. Auch kann beispielsweise bei einer spanenden Bearbeitung als Bearbeitungsparameter P' eine gewünschte Schnitttiefe vorgegeben werden. In diesem Fall berücksichtigt das CAM-System 4 im Rahmen der Ermittlung der Bahn B zusätzlich den Bearbeitungsparameter P'. Der Bearbeitungsparameter P' kann dem CAM-System 4 beispielsweise im Schritt S2 zusammen mit den Dynamikparametern D zugeführt werden.

Es ist möglich, dass das CAM-System 4 die Dynamikparameter D der Bearbeitungsmaschine 7 in Abhängigkeit von der durch das Abfahren der Bahn B bewirkten Bearbeitung des Werkstücks 3 nachführt und im Rahmen der Ermittlung der Bahn B die dynamischen maschinenspezifischen Dynamikparameter D der Bearbeitungsmaschine 7 berücksichtigt. Es ergibt sich also ein verkoppeltes System, bei dem die Dynamikparameter D die Bahn B und die Bahn B bzw. zumindest der Ort wiederum die Dynamikparameter D beeinflussen.

Eine dynamische Ermittlung der Dynamikparameter D ist insbesondere dann sinnvoll, wenn eine Achse A1 bis An auf das Werkstück 3 wirkt und als Dynamikparameter D für diese Achse A1 bis An nicht nur die maximal mögliche Beschleunigung amax und/oder der maximal mögliche Ruck rmax vorgegeben sind, sondern auch das maximale Moment Mmax des zugehörigen Antriebs und/oder der maximale Stromanstieg δImax dieses Antriebs. Eine dynamische Ermittlung der Dynamikparameter D ist insbesondere dann sinnvoll, wenn - beispielsweise aufgrund der Kinematik der Bearbeitungsmaschine 7 - die maximal mögliche Geschwindigkeit vmax, die maximal mögliche Beschleunigung amax und/oder der maximal mögliche Ruck rmax von der jeweiligen Position des Werkzeugs 9 relativ zum Werkstück 3 abhängen. In all diesen Fällen kann das CAM-System 4 entsprechend der Darstellung in FIG 2 im Schritt S3 (bzw. im Schritt S12 von FIG 4) zusätzlich zur Bahn B (beispielsweise als Funktion eines Bahnparameters s) auch die zugehörigen Dynamikparameter D (beispielsweise ebenfalls als Funktion des Bahnparameters s) ermitteln und im Rahmen der Optimierung berücksichtigen. Insbesondere kann das CAM-System 4 ermitteln, ob beispielsweise die Beschleunigung des Werkstücks 3 in einem bestimmten Stadium der Bearbeitung durch das maximal zulässige Moment Mmax oder die maximal zulässige Beschleunigung amax begrenzt wird, und diesen Sachverhalt entsprechend berücksichtigen. Der Bahnparameter s gibt im Kern den Weg an, der ab Beginn der Bahn B bis zur jeweiligen Position auf der Bahn B zurückgelegt worden ist.

In manchen Fällen ist die Aufspannung A des Werkstücks 3 in einer Werkstückhalterung 11 fest vorgegeben. In anderen Fällen ist es möglich, das Werkstück 3 auf verschiedene Weise in der Werkstückhalterung 11 aufzuspannen. In derartigen Fällen kann im Falle einer ersten Aufspannung A eine erste Bahn B optimal sein, im Falle einer zweiten Aufspannung A eine zweite Bahn B. In diesem Fall ist es möglich, dass das CAM-System 4 für die verschiedenen möglichen Aufspannungen A jeweils die zugehörige Bahn B ermittelt und miteinander vergleicht. In diesem Fall ermittelt das CAM-System 4 in einem Schritt S4 zusätzlich diejenige Aufspannung A, deren zugehörige Bahn B besser bewertet wird und gibt diese Aufspannung A aus, beispielsweise an eine Bedienperson 12.

Es ist möglich, dass das CAM-System 4 mit der numerischen Steuerung 8 zu einer Einheit zusammengefasst ist. Dies ist in FIG 1 durch eine gestrichelte Umrahmung dargestellt, die sowohl das CAM-System 4 als auch die numerische Steuerung 8 enthält. Es ist jedoch ebenso möglich, dass das CAM-System 4 eine von der numerischen Steuerung 8 getrennte Einheit ist. Dies ist in FIG 1 durch eine strichpunktierte Trennlinie innerhalb der gestrichelten Umrahmung angedeutet.

Zusammengefasst betrifft die vorliegende Erfindung somit folgenden Sachverhalt:
Eine Recheneinrichtung 4 nimmt eine Zielkontur 2 eines Werkstücks 3 entgegen. Sie ermittelt, ausgehend von einer Anfangskontur 10 des Werkstücks 3, eine Bahn B, die von einem Werkzeug 9 einer Bearbeitungsmaschine 7 relativ zu dem von dem Werkzeug 9 zu bearbeitenden Werkstück 3 abgefahren werden soll. Die Ermittlung ist derart, dass die durch das Abfahren der Bahn B bewirkte Bearbeitung des Werkstücks 3 das Werkstück 3 in die Zielkontur 2 überführt. Die Recheneinrichtung 4 berücksichtigt im Rahmen der Ermittlung der Bahn B maschinenspezifische Dynamikparameter D der Bearbeitungsmaschine 7, die während der Bearbeitung des Werkstücks 3 durch das Werkzeug 9 einzuhalten sind.

Die vorliegende Erfindung weist viele Vorteile auf. Insbesondere kann auf einfache Weise die Bahn B (bzw. hierzu gleichwertig ein Teileprogramm) ermittelt werden, das zusätzlich zum Bewirken der gewünschten Bearbeitung des Werkstücks 3 zu einem optimierten Betrieb der Bearbeitungsmaschine 7 führt. Die real verfügbare Dynamik der Bearbeitungsmaschine 7 wird optimal genutzt. Die Optimierung kann nach Bedarf auf die benötigte Bearbeitungszeit, Zerspanungsbedingungen, Verschleiß und andere gerichtet sein. Die Produktivität und die Standzeit des Werkzeugs 9 und der Bearbeitungsmaschine 7 können erhöht werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ermittlungsverfahren für eine Bahn (B), die von einem Werkzeug (9) einer Bearbeitungsmaschine (7) relativ zu einem von dem Werkzeug (9) zu bearbeitenden Werkstück (3) abgefahren werden soll,
- wobei eine Recheneinrichtung (4) eine Zielkontur (2) des Werkstücks (3) entgegennimmt,
- wobei die Recheneinrichtung (4), ausgehend von einer Anfangskontur (10) des Werkstücks (3), die Bahn (B) derart ermittelt, dass die durch das Abfahren der Bahn (B) bewirkte Bearbeitung des Werkstücks (3) das Werkstück (3) in die Zielkontur (2) überführt,
**dadurch gekennzeichnet,**
**dass** die Recheneinrichtung (4) im Rahmen der Ermittlung der Bahn (B) maschinenspezifische Dynamikparameter (D) der Bearbeitungsmaschine (7) berücksichtigt, die während der Bearbeitung des Werkstücks (3) durch das Werkzeug (9) einzuhalten sind.

2. Ermittlungsverfahren nach Anspruch 1,
**dadurch gekennzeichnet,**
**dass** die Recheneinrichtung (4) die Bahn (B) derart ermittelt, dass sie unter Berücksichtigung der maschinenspezifischen Dynamikparameter (D) der Bearbeitungsmaschine (7) gemäß einem Bewertungskriterium (K) optimal ist.

3. Ermittlungsverfahren nach Anspruch 2,
**dadurch gekennzeichnet,**
**dass** in das Bewertungskriterium (K) die zum Abfahren der Bahn (B) benötigte Zeit (T) und/oder mindestens ein von der Bearbeitung des Werkstücks (3) durch das Werkzeug (9) abhängiges Technologiekriterium (TK) eingehen.

4. Ermittlungsverfahren nach Anspruch 1, 2 oder 3,
**dadurch gekennzeichnet,**
**dass** die Bearbeitungsmaschine (7) von einer numerischen Steuerung (8) gesteuert wird und dass die Recheneinrichtung (4) im Rahmen der Ermittlung der Bahn (B) zusätzlich steuerungsspezifische Parameter (P) der numerischen Steuerung (8) berücksichtigt.

5. Ermittlungsverfahren nach einem der obigen Ansprüche,
**dadurch gekennzeichnet,**
**dass** die Recheneinrichtung (4) zusätzlich mindestens einen die Bearbeitung des Werkstücks (3) durch das Werkzeug (9) qualitativ oder quantitativ charakterisierenden Bearbeitungsparameter (P') entgegennimmt und dass die Recheneinrichtung (4) im Rahmen der Ermittlung der Bahn (B) zusätzlich den Bearbeitungsparameter (P') berücksichtigt.

6. Ermittlungsverfahren nach einem der obigen Ansprüche,
**dadurch gekennzeichnet,**
**dass** die Recheneinrichtung (4) die Dynamikparameter (D) der Bearbeitungsmaschine (7) in Abhängigkeit von der durch das Abfahren der Bahn (B) bewirkten Bearbeitung des Werkstücks (3) nachführt und dass die Recheneinrichtung (4) im Rahmen der Ermittlung der Bahn (B) die dynamischen maschinenspezifischen Dynamikparameter (D) der Bearbeitungsmaschine (7) berücksichtigt.

7. Ermittlungsverfahren nach einem der obigen Ansprüche,
**dadurch gekennzeichnet,**
**dass** die Recheneinrichtung (4) zusätzlich zur Bahn (B) auch eine Aufspannung für das Werkstück (3) in einer Werkstückhalterung (11) der Bearbeitungsmaschine (7) ermittelt.

8. Computerprogramm, das Maschinencode (6) umfasst, der von einer Recheneinrichtung (4) abarbeitbar ist, wobei die Abarbeitung des Maschinencodes (6) durch die Recheneinrichtung (4) bewirkt, dass die Recheneinrichtung (4) ein Ermittlungsverfahren nach einem der obigen Ansprüche ausführt.

9. Recheneinrichtung, wobei die Recheneinrichtung mit einem Computerprogramm (5) nach Anspruch 8 programmiert ist, so dass die Recheneinrichtung im Betrieb ein Ermittlungsverfahren nach einem der Ansprüche 1 bis 7 ausführt.

10. Recheneinrichtung nach Anspruch 9,
**dadurch gekennzeichnet,**
**dass** die Recheneinrichtung mit einer die Bearbeitungsmaschine (7) steuernden numerischen Steuerung (8) zu einer Einheit zusammengefasst ist.

11. Recheneinrichtung nach Anspruch 9,
**dadurch gekennzeichnet,**
**dass** die Recheneinrichtung eine von einer die Bearbeitungsmaschine (7) steuernden numerischen Steuerung (8) getrennte Einheit ist.
